# EUROPEAN PATENT APPLICATION

(11) **EP 2 821 772 A1**
(43) Date of publication of application: **07.01.2015**
(21) Application number: 12870021.8
(22) Date of filing: 24.07.2012
(51) Int. Cl.: G01N 3/22, B22C 9/24, B22D 17/00, G01N 29/04

(54) **DIE-CAST PRODUCT RIGIDITY EVALUATION METHOD AND DIE-CAST PRODUCT**

(30) Priority: 29.02.2012 JP 2012043827; 07.06.2012 JP 2012129858
(71) Applicant: NSK Ltd., Tokyo 141-8560 (JP)
(72) Inventor: MITSUMURA, Munetaka, Fujisawa-shi Kanagawa 251-8501 (JP); OKITA, Shigeru, Fujisawa-shi Kanagawa 251-8501 (JP); UCHIDA, Hiroyuki, Fujisawa-shi Kanagawa 251-8501 (JP)
(74) Representative: Klingseisen, Franz
(86) International application number: PCT/JP2012/004686
(87) International publication number: WO 2013/128500

(57) **Abstract**

There are provided a strength evaluation method of a die casting product capable of appropriately evaluating the strength of the die casting product, and a die casting product in which the strength is evaluated by the strength evaluation method. A breakage test is performed by a simple strength tester after casting, and then, a strength reduction ratio is estimated based on an area ratio of cold flakes in a broken surface obtained by broken surface observation.
Alternatively, ultrasonic flaw detection is performed for an internal defect in a predetermined range of a high stress portion of the die casting product, calculated by stress analysis in advance, and the die casting product is evaluated to have a predetermined strength when a defect ratio obtained by dividing a total area of the internal defect in the predetermined range by a total defect detection area is less than or equal to a predetermined value.

## Description

### Technical Field

The present invention relates to a strength evaluation method of a die casting product, and a die casting product used in an electric power steering device of a vehicle (for example, a column housing made of an aluminum die casting).

### Background Art

In the related art, in order to prevent burglary of an automobile, a steering lock device that stops an engine when an ignition switch key is pulled out and also prevents rotation of a steering wheel has been widely used.

A steering column that serves as a main body and an attachment part of the steering lock device used in this manner is required to be solid and not to be easily broaken. For example, JIS D5812 or the like regulates that no functional abnormality occur even when a torque of 200 Nm is applied to a steering shaft in a state where the steering shaft is locked.

Here, in order to reduce the weight of the steering column, in many cases, the steering column is made of a die casting of a light metal such as aluminum or magnesium, for example. Accordingly, an internal defect occurs in the steering column, and thus, if excessive torque is applied, there is a fear that the steering column may be broken. Thus, it is important how to evaluate the strength.

In particular, a strength decrease due to cold flakes is known as an internal defect of a die casting. Thus, for the strength evaluation, it is necessary to inspect the cold flakes.

As an inspection method of such cold flakes, PTLs 1 to 3 disclose the following techniques.

First, PTL 1 discloses a technique in which a mixture of a component (Pb) that is easily detected by cold flakes detection apparatus that employs radiation, magnetism, ultrasonic waves or the like and a sleeve lubricant is coated on the inner surface of a sleeve and the detection sensitivity of cold flakes increases as Pb enters the cold flakes and a cavity.

Further, PTL 2 discloses a technique that obtains dispersion information on cold flakes in a non-destructive state using a measurement method in which ultrasonic flaw detection and X-ray CT scanning are combined.

Specifically, ultrasonic waves are irradiated onto an aluminum die casting product, and a blow hole and cold flakes of the aluminum die casting product are detected based on information on sound waves from the aluminum die casting product to obtain first internal defect three-dimensional distribution data. Further, the aluminum die casting product is measured by the X-ray CT scanning, and the blow hole of the aluminum die casting product is detected from plural cross-sectional images of the aluminum die casting product to obtain second internal defect three-dimensional distribution data. Then, the first internal defect three-dimensional distribution data and the second internal defect three-dimensional distribution data are compared with each other to obtain three-dimensional distribution data on the cold flakes of the aluminum die casting product.

Further, PTL 3 discloses a simple cold flakes inspection method in which a test piece cut out of a runner portion is abraded and corroded and an area ratio of cold flakes is then calculated based on observation of the cold flakes.

Further, as another strength evaluation method of an aluminum die casting product, PTL 4 discloses a technique in which ultrasonic flaw detection is performed for an aluminum die casting product having a complex member therein and a distance from a front surface to the complex member, an impregnation state of aluminum melt with respect to the complex member, a breakage state and the like are measured to determine whether the aluminum die casting product is good or bad.

### Citation List

### Patent Literature

PTL 1: JP 3-226668 A
PTL 2: JP 2005-91288 A
PTL 3: JP 2007-111728 A
PTL 4: JP 2004-144489 A

### Summary of Invention

### Technical Problem

However, in the techniques disclosed PTL 1 to 3, since a special inspection apparatus is necessary, operation time becomes long. Further, it is difficult to perform the strength evaluation in a casting site. Furthermore, since the accuracy of measurement and detection is not sufficient, it is difficult to perform the strength evaluation with high accuracy.

Specifically, the technique disclosed in PTL 1 has an advantage in that a non-destructive inspection is available, but since it is necessary to perform an inspection using a special apparatus that employs radiation, magnetism, ultrasonic waves or the like after casting, operation time becomes long. Further, it is difficult to perform the strength evaluation in a casting site. Furthermore, since the accuracy of measurement and detection is not sufficient, it is difficult to perform the strength evaluation with high accuracy. "

Further, similar to the technique disclosed in PTL 1, the technique disclosed in PTL 2 has an advantage in that a non-destructive inspection is available, but since it is necessary to perform an inspection using a special apparatus for ultrasonic flaw detection or CT scanning after casting, operation time becomes long. Further, it is difficult to perform the strength evaluation in a casting site. Furthermore, since the accuracy of measurement and detection is not sufficient, it is difficult to perform the strength evaluation with high accuracy.

Furthermore, the technique disclosed in PTL 3 has an advantage in that a special inspection apparatus is not necessary, but since the abrasion and corrosion are necessary, operation time becomes long. Further, since the test piece is cut out of the runner portion instead of a product, it is difficult to perform the strength evaluation with high accuracy.

In addition, the strength evaluation method of the aluminum die casting product disclosed in PTL 4 can perform only the measurement of the impregnation state or the breakage with respect to the aluminum die casting product having the complex member therein, but cannot evaluate the strength of an aluminum die casting product having no complex member.

On the other hand, the strength evaluation method of the aluminum die casting product disclosed in PTL 2 can perform the evaluation of an aluminum die casting product having no complex member. However, it is substantially difficult to perform the inspection for all parts of a large-sized aluminum die casting product or a complicated aluminum die casting product, for example. In an actual aluminum die casting product, it is difficult to avoid an internal defect such as a blow hole, and breakage may occur from the internal defect as a starting point. Further, in many cases, the aluminum die casting product has a complicated shape, and thus, it is difficult to detect the internal defect by ultrasonic flaw detection, for example. Furthermore, it is not obvious which portion the strength is to be evaluated in

In order to solve the above-mentioned problems, an obj ect of the invention is to provide a strength evaluation method of a die casting product capable of shortening operation time, performing a strength evaluation (strength guarantee) at a casting site and performing the strength evaluation with high accuracy, and such a die casting product.

Further, another object of the invention is to provide a strength evaluation method of a die casting product capable of appropriately evaluating the strength of an actual die casting product and obtaining a die casting product having a predetermined strength, and such a die casting product.

### Solution to Problem

In order to achieve the above-mentioned objects, according to an embodiment of the invention, there is provided a strength evaluation method of a die casting product, comprising: a casting step of casting a die casting product; a breakage step of performing a breakage test of the die casting product after casting; a strength reduction ratio calculation step of measuring an area ratio of cold flakes present in a broken surface of the die casting product in the breakage step, and obtaining a strength reduction ratio from the relationship between a torsional breakage torque value in the breakage step and the area ratio; and a strength evaluation area ratio calculation step of calculating a threshold value of -3σ (σ is a standard deviation) using the strength reduction ratio as an average value, and calculating a strength evaluation area ratio of the die casting product from the threshold value and a predetermined strength range.

Further, in the strength evaluation method of the die casting product described above, it is preferable that the casting step be a casting step based on JIS D5812, the die casting product be an aluminum column housing, and the breakage test be a torsion test for the die casting product.

Further, in the strength evaluation method of the die casting product described above, it is preferable that the die casting product be used in a steering lock provided with an ignition switch for vehicle steering.

Further, according to another embodiment of the invention, there is provided a column housing made of an aluminum die casting in which the strength is evaluated by the strength evaluation method of the die casting product described above, in which the column housing made of an aluminum die casting is formed with a hole for the steering lock, and an area ratio of cold flakes in the area of a broken surface ranged up to a stress of 1/2 of a maximum value of stress acting on a breakage starting point, calculated by stress analysis from the breakage starting point when the hole for the steering lock is broken by the torsion test, is less than 10%.

Further, according to still another embodiment of the invention, there is provided a strength evaluation method of a die casting product, comprising: performing, with respect to a high stress portion obtained by performing stress analysis for the die casting product in advance, ultrasonic flaw detection for an internal defect in a predetermined range of the high stress portion; and evaluating that the die casting product has a predetermined strength when a defect ratio obtained by dividing a total area of the internal defect in the predetermined range by a total defect detection area is less than or equal to a predetermined value..

Here, it is preferable that the predetermined range of the high stress portion be a stress range of 50% or greater of a maximum stress of the high stress portion..

Further, according to still another aspect of the invention, there is provided a die casting product in which the strength is evaluated by the strength evaluation method of the die casting product described above, in which the defect ratio is 0.5% or less.

Further, it is preferable that the die casting product be a column housing used in an electric power steering device of a vehicle, and the high stress portion is a key lock portion of the column housing

### Advantageous Effects of Invention

According to the embodiment of the invention, it is possible to provide a strength evaluation method of a die casting product capable of shortening operation time, performing a strength evaluation at a casting site whenever necessary and performing the strength evaluation with high accuracy, and such a die casting product. Further, according to the strength evaluation method of a die casting product according to the embodiment of the invention, since ultrasonic flaw detection is performed for an internal defect in a predetermined range of the high stress portion with respect to a high stress portion obtained by performing stress analysis for the die casting product in advance; and the die casting product is evaluated to have a predetermined strength when a defect ratio obtained by dividing a total area of the internal defect in the predetermined range by a total defect detection area is less than or equal to a predetermined value, it is possible to appropriately evaluate the strength of an actual die casting product

Furthermore, since the predetermined range of the high stress portion is a stress range of 50% or greater of a maximum stress of the high stress portion, it is possible to more appropriately evaluate the strength of the die casting product.

In addition, according to the die casting product according to the embodiment of the invention, by evaluating the strength by the strength evaluation method of the die casting product according to the embodiment of the invention, and by setting a defect ratio obtained by dividing a total area of the internal defect in the predetermined range of the high stress portion by a total defect detection area to be 0.5% or less, it is possible to obtain a die casting product having a predetermined strength.

### Brief Description of Drawings

FIG. 1 is a flowchart illustrating a step in a first embodiment of a strength evaluation method of a die casting product;
FIG. 2 is a perspective view illustrating a configuration of a steering column housing in the first embodiment of the strength evaluation method of the die casting product;
FIG. 3 is a schematic diagram illustrating a configuration of a torsion tester in the first embodiment of the strength evaluation method of the die casting product;
FIGs 4A and 4B are stereoscopic microphotographs illustrating an observation example of an area ratio of cold flakes of a broken surface in the first embodiment of the strength evaluation method of the die casting product;
FIG. 5 is a graph illustrating the relationship between an area ratio of cold flakes and a torsional breakage torque (desired strength range) in the first embodiment of the strength evaluation method of the die casting product;
FIGs 6A to 7C are diagrams illustrating a second embodiment of a strength evaluation method of a die casting product;
FIGs 7A and 7B are diagrams illustrating internal defect detection in the strength evaluation method of the die casting product in FIGs 6A to 6C;
FIG. 8 is a diagram illustrating a high stress portion of a die casting product;
FIG. 9 is a diagram illustrating an internal defect detection range of a high stress portion of a die casting product;
FIG. 10 is a diagram illustrating an image obtained in the internal defect detection in FIGs 6A to 6C;
FIG. 11 is a diagram illustrating a defect detection image obtained in the internal defect detection in FIGs 6A to 6C;
FIG. 12 is a diagram illustrating an image obtained by binarizing the defect detection image in FIG. 11;
FIG. 13 is a diagram illustrating obtained by extracting an internal defect area from a binarized defect detection image in FIG. 12 by image analysis;
FIG.. 14 is a diagram illustrating the relationship between a defect ratio of an internal defect in the detection range in FIG. 9 and the number of torsion when breakage occurs in a torsion test;
FIG. 15 is a diagram illustrating an internal defect detection range of a high stress portion of a die casting product;
FIG 16 is a diagram illustrating the relationship between a defect ratio of an internal defect in the detection range in FIG. 15 and the number of torsion when breakage occurs in a torsion test;
FIG. 17 is a diagram illustrating an internal defect detection range of a high stress portion of a die casting product; and
FIG. 18 is a diagram illustrating the relationship between a defect ratio of an internal defect in the detection range in FIG. 17 and the number of torsion when breakage occurs in a torsion test.

### Description of Embodiments

### (First embodiment)

Hereinafter, a first embodiment of a strength evaluation method of a die casting product will be described with reference to the drawings.

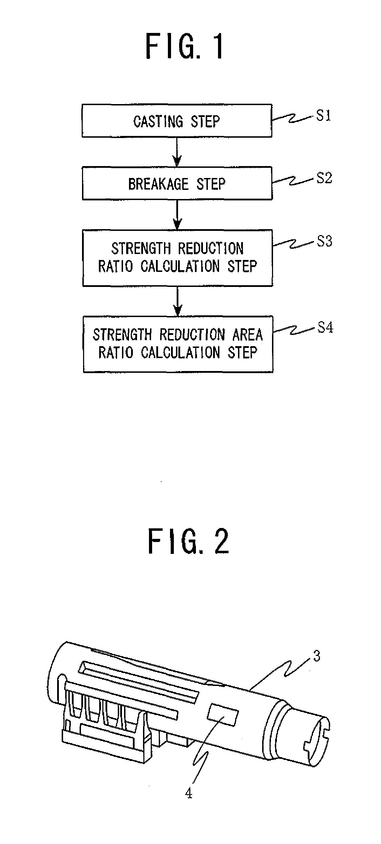

As shown in FIG. 1, the strength evaluation method of the present embodiment includes a casting step (S1), a breakage step (S2), a strength reduction ratio calculation step (S3), and a strength evaluation area ratio calculation step (S4).

### <Casting step>

The casting step in the present embodiment refers to a step of performing die casting using ADC12 that is an Al-Si-Cu based aluminum alloy of JIS H5302, for example. It is preferable that a die casting product obtained in this step be a steering column housing 3 of an automobile steering device shown in FIG. 2.

### <Breakage step>

The breakage step in the present embodiment refers to a step of performing a breakage test in a casting site for the die casting product obtained in the above-described casting step. It is preferable that the breakage test be a torsion test.

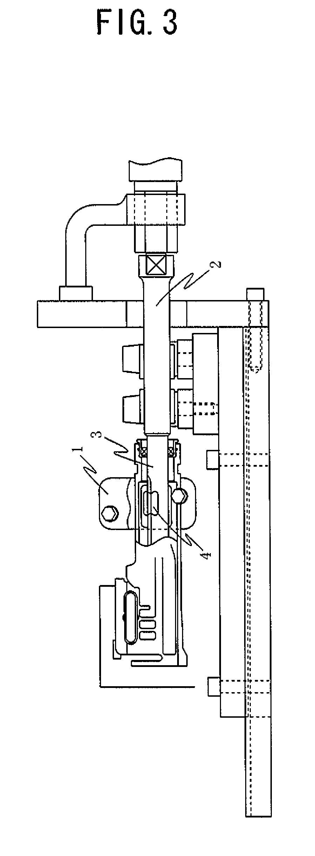

In this torsion test, specifically, as shown in FIG 3, a key lock jig 1 screw-coupled with the steering column housing (die casting product) 3 includes a convex key that protrudes from a key hole portion of the steering column housing 3 toward the inner diameter of the steering column housing 3. Further, a concave portion that is engaged with the key is formed in a torque transmission shaft 2. Torque transmits from the torque transmission shaft 2 to the key seat portion 4 of the steering column housing 3 through the convex key of the key lock jig 1, and causes the steering column housing to be broken using a corner portion of the key seat portion 4 as a starting point.

### <Strength reduction ratio calculation step>

The strength reduction ratio calculation step refers to a step of measuring an area ratio of cold flakes in a broken surface of the die casting product in the breakage step and calculating a strength reduction ratio from the relationship between a torsional breakage torque value and the area ratio in the breakage step

### <Strength evaluation area ratio calculation step>

The strength evaluation area ratio calculation step refers to a step of calculating a strength evaluation area ratio of the die casting product based on the strength reduction ratio calculated in the strength reduction ratio calculation step. Specifically, in this step, first, a threshold value of -3σ (σ is a standard deviation) is calculated using the strength reduction ratio calculated in the strength reduction ratio calculation step as an average value. Then, the strength evaluation area ratio of the die casting product is calculated from the threshold value and a predetermined strength range.

### Examples

Hereinafter, examples of the strength evaluation method of the die casting product according to the first embodiment and the die casting product (column housing made of aluminum die casting) in which the strength is evaluated by the strength evaluation method will be described. Table 1 illustrates the relationship between conditions of the casting step in the present examples, the strength of the die casting product and the area ratio of the cold flakes.

### <Casting step>

Die casting was performed under the conditions shown in Table 1, using ADC 12 that is the Al-Si-Cu based aluminum alloy of JIS H5302, to obtain steering column housings of Examples 1 to 16 and Comparative examples 1 to 6.

### <Breakage step>

Then, each steering column housing 1 of Examples 1 to 16 and Comparative examples 1 to 6 was caused to be torsionally broken using a torsion tester shown in FIG. 3, and then, a torsional torque value when the breakage is occurred was measured. The measurement result is shown Table 1

**[Table 1]**

| | Melt temperature (°C) | Biscuit thickness (mm) | Torsional breakage torque value (Nm) | Cold flakes area ratio (%) |
|---|---|---|---|---|
| Example 1 | 680 | 30 | 355 | 0 |
| Example 2 | 680 | 30 | 333 | 0 |
| Example 3 | 680 | 30 | 312 | 2 |
| Example 4 | 680 | 30 | 341 | 0 |
| Example 5 | 680 | 30 | 350 | 0 |
| Example 6 | 680 | 30 | 345 | 2 |
| Example 7 | 680 | 30 | 340 | 2 |
| Example 8 | 680 | 30 | 345 | 0 |
| Example 9 | 680 | 30 | 331 | 0 |
| Example 10 | 680 | 30 | 356 | 0 |
| Example 11 | 670 | 20 | 290 | 10 |
| Example 12 | 670 | 20 | 330 | 0 |
| Example 13 | 670 | 20 | 321 | 5 |
| Example 14 | 670 | 20 | 313 | 5 |
| Example 15 | 670 | 20 | 345 | 0 |
| Example 16 | 670 | 20 | 327 | 2 |
| Comparative example 1 | 660 | 15 | 278 | 20 |
| Comparative example 2 | 660 | 15 | 274 | 15 |
| Comparative example 3 | 660 | 15 | 240 | 35 |
| Comparative example 4 | 660 | 15 | 292 | 15 |
| Comparative example 5 | 660 | 15 | 263 | 25 |
| Comparative example 6 | 660 | 15 | 289 | 20 |

### <Strength reduction ratio calculation step>

Then, a portion around a starting point of the broken surface was observed by a stereoscopic microscope to identify the cold flakes, and the area ratio of the cold flakes was then calculated. The calculation result is shown in Table 1. Here, a value of stress that is to act on the starting point of the broken surface was calculated in advance by stress analysis, and then, a stress range up to 1/2 of the stress value was set as a broken surface observation range. In the present examples, the observation range of the area ratio of the cold flakes was set as a range up to a position of 15 mm from the starting point.

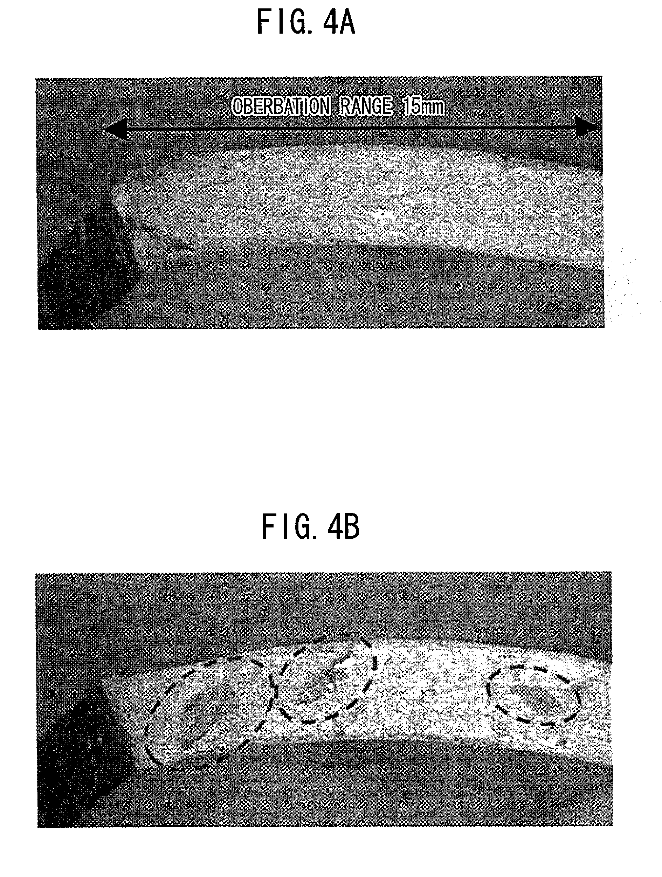

Further, observation examples of a broken surface are shown in FIGs 4A to 4C. FIG. 4A shows a broken surface of "Example 1" in Table 1, and FIG. 4B shows a broken surface of "Comparative example 1" in Table 1 Portions surrounded by dashed lines in FIG. 4B represent portions for which the area (ratio) of the cold flakes is observed (calculated). In a case where the area ratio of the cold flakes is schematically calculated an actual casting site, for example, by manufacturing boundary samples in advance, it is possible to simplify the step.

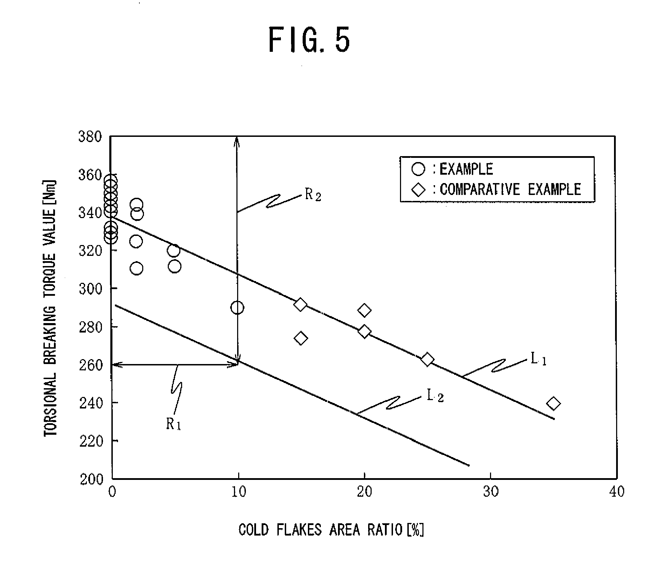

Here, the relationship between the Torsional breakage torque value obtained in the strength reduction ratio calculation step and the area ratio of the cold flakes may be plotted as in a graph shown in FIG.. 5. In FIG. 5, Examples 1 to 16 are indicated by "○", and Comparative examples 1 to 6 are indicated by "◆"

Further, as shown in FIG. 5, a straight line L1 that represents the "(strength reduction ratio" is defined from the respective Examples and Comparative examples that are plotted. The straight line L1 is calculated by a regression line obtained from the respective Examples and Comparative examples by a least squares method. In this manner, the strength reduction ratio of the die cast product that is a target is calculated and is represented by the straight line L1.

### <Strength evaluation area ratio calculation step>

Thereafter, as shown in FIG.. 5, a lower management limit line L2, which is defined by -3σ (σ is the standard deviation) using each point on the straight line L1 that represents the "strength reduction ratio" as an average value, is defined as a "threshold value". Further, the strength evaluation area ratio (a range of the area ratio of the cold flakes that is preferable as the examples (indicated by R1 in FIG. 5)) is calculated from the lower management limit line L2 and a "desired strength range (indicated by R2 in FIG. 5)". For example, in a case where the torsional breakage torque value is set to "260 Nm or greater" as the "desired strength range" of the die casting product that is a target, as the die casting product that is preferable as the examples, a die casting product in which the area ratio of the cold flakes (strength evaluation area ratio) is 10% or less is emphasizedly evaluated based on the lower management limit line L2.

As described above, according to the present embodiment, by observing the broken surface of the die casting product for which the breakage test is performed and by estimating the strength reduction ratio based on the area ratio of the cold flakes in the obtained broken surface, it is possible to provide a strength evaluation method that is simple and reliable. Thus, it is possible to prevent the problem that a special inspection apparatus is necessary and operation time is long in the strength evaluation method based on the cold flakes detection in the related art in which the broken surface is abraded and is observed by the optical microscope or in which the ultrasonic flaw detection is used. Further, in the related art, since the strength evaluation is performed with only the torsional breakage torque value, deformation of the jig, a setting error of the product or variation of a manual torque application speed may occur, which may result in insufficient reliability. On the other hand, according to the present embodiment, it is possible to perform the strength evaluation with high accuracy.

Hereinabove, the first embodiment of the strength evaluation method of the die casting product is described, but the invention is not limited thereto, and various modifications and improvements may be made. For example, as described above, the invention is not be applied to only the simple strength evaluation, but may also be applied to setting of appropriate die casting conditions. Specifically, as in the present examples, by setting the melt temperature to 670°C or higher, and preferably, to 680°C or higher, it is possible to set the ratio of the cold flakes to 10% or less, to thereby secure sufficient strength.

### (Second embodiment)

Next, a second embodiment of a strength evaluation method of a die casting product will be described with reference to drawings.

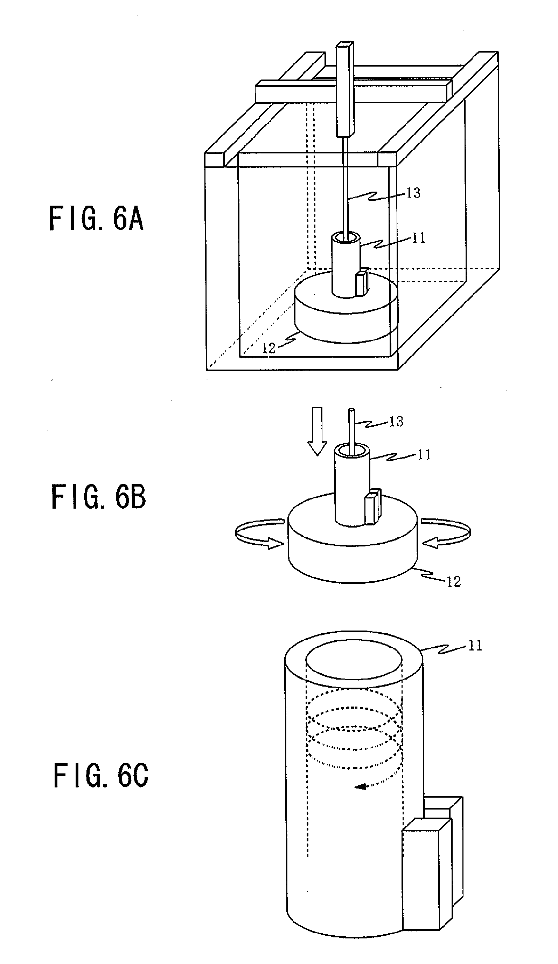

FIGs 6A to 6C are diagrams illustrating a six axis ultrasonic flaw detector used in the strength evaluation method of the die casting product according to the present embodiment. FIG. 6A is a diagram illustrating the entire detector, FIG. 6B is a diagram illustrating details of a detection target and a turntable, and FIG. 6C is a diagram illustrating an internal defect detection. In FIGs 6A to 6C, reference numeral 11 represents an aluminum die casting product that is a strength evaluation target in the present embodiment, which is a column housing of an electric power steering device, for example.

In the present embodiment, the aluminum die casting product (column housing) 11 is loaded onto a turntable 12, and then, a probe 13 moves down from the upside while the turntable 12 is rotating to detect the inside of the aluminum die casting product (column housing) 11 in a spiral form Since the die casting product (column housing) 11 of the present embodiment includes a cylindrical portion, a high stress portion of the cylindrical portion (to be described later) is detected by the ultrasonic flaw detector to detect an internal defect.

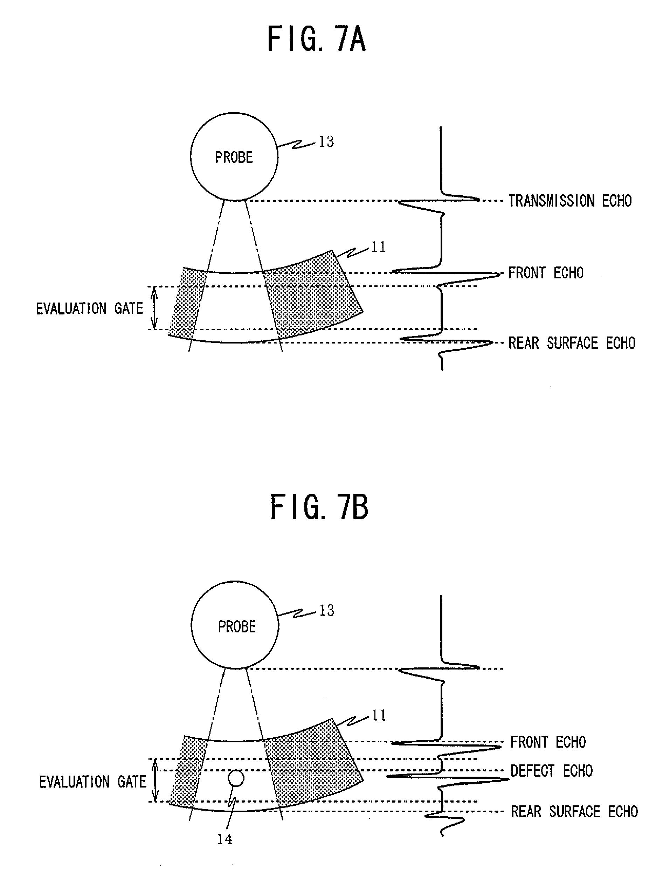

In the detection, as shown in FIG 7A, an evaluation gate was set between a front surface echo and a rear surface echo of the aluminum die casting product (column housing) 11. The evaluation gate refers to a flaw detection range in an ultrasonic wave irradiation direction or in a reflection direction. In the ultrasonic flaw detection, ultrasonic waves oscillating from the probe 13 are reflected from the front surface or the rear surface of the aluminum die casting product (column housing) 11 to be returned. The reflected waves correspond to the front surface echo and the rear surface echo, respectively. As shown in FIG. 7B, in a case where an internal defect 14 is present within the detection range of the aluminum die casting product (column housing) 11, a defect echo appears between the front surface echo and the rear surface echo, that is, in the range of the evaluation gate. Since a time point of the front surface echo and a time point of the rear surface echo may be known in advance, an echo present between these time points becomes the defect echo. Further, a technique of showing the greatest defect echo inside the aluminum die casting product (column housing) 11 was used. Here, the inner diameter of the cylindrical portion of the column housing that is the die casting product 11 according to the present embodiment was set to ϕ 38 mm, and as described later, the detection range was set to 12 mm in the axial direction of the cylindrical portion. Further, the inner circumferential surface of the cylindrical portion of the aluminum die casting product (column housing) 11 is turning-processed. Thus, the ultrasonic waves are hardly reflection diffused from the inner circumferential surface, thereby making it easy to detect the defect echo..

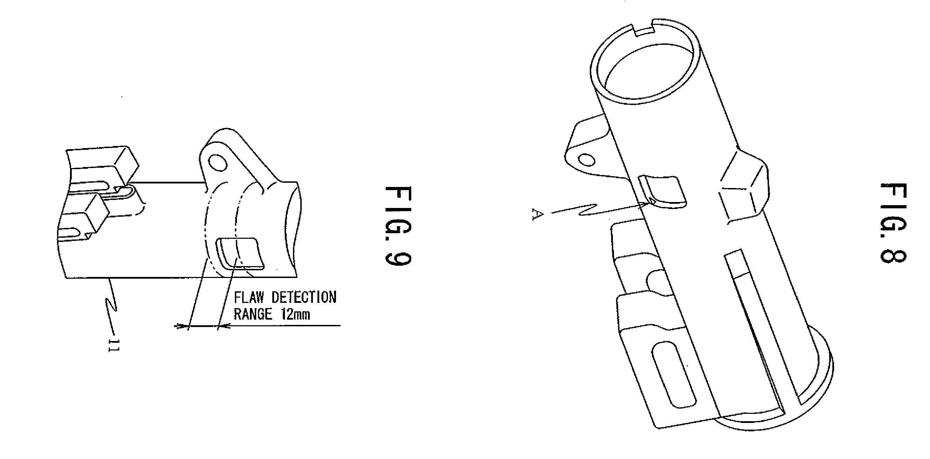

Prior to the detection, a key was inserted into a key lock portion of the column housing that is the die casting product 11 according to the present embodiment, and then, stress analysis was performed under the same load condition as in a torsion test in which a load was applied in a torsional direction.. As a result, it can be understood that a portion indicated by "A" in FIG. 8, that is, the key lock portion is a portion where the stress is highest. Further, in the torsion test in the related art, similarly, the breakage occurs in the key lock portion of the column housing. In other words, in the high stress portion (key lock portion), the breakage using the internal defect as the starting point easily occurs, and thus, the internal defect of the high stress portion was determined to be detected.

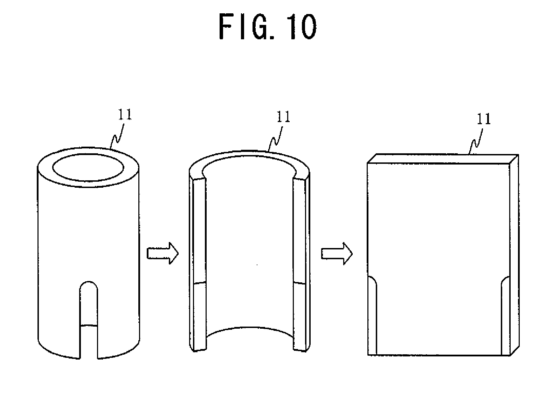

FIG. 9 illustrates a detection range of a high stress portion (key lock portion) 15 of the die casting product (column housing) 11 according to the present embodiment. In the present embodiment, a range of 12 mm in the axial direction of the cylindrical portion of the column housing, including the above-described portion where the stress is highest, is a target of the internal defect detection. This internal defect detection range refers to a stress range of 50% or greater of the maximum stress An ultrasonic flaw detection is performed for the inside of the aluminum die casting product (column housing) 11 in the internal defect detection range including the high stress portion (key lock portion) 15. Further, as described in FIG. 10, the internal defect is shown in a diagram in which the aluminum die casting product (column housing) 11 is cut from a slit portion and the inside thereof is developed.

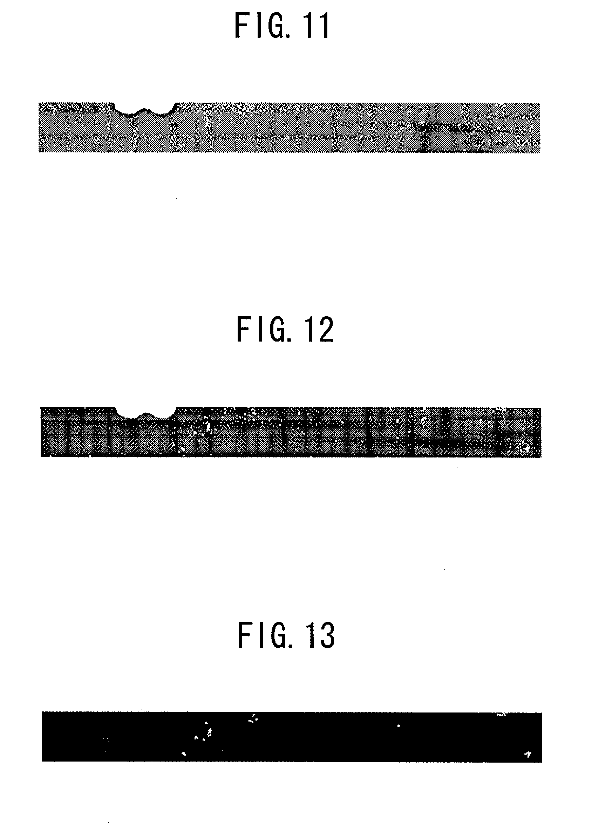

FIG.. 11 illustrates a defect detection image obtained by the ultrasonic flaw detection in the above-described defect detection range of the aluminum die casting product (column housing) 11. As described above, since the defect detection range is 12 mm in the height direction and is the entire inner circumference, the length of a transverse axis of the image is 119 mm (the length of an inner circumference having an inner diameter of ϕ 38 mm), and the length of a longitudinal axis of the image is 12 mm. An echo strength of 50% is used as a threshold value, an image obtained by binarizing echoes equal to or greater than the threshold value and echoes equal to or less than the threshold value for color division with respect to the defect detection image is shown in FIG. 12. Thin gray portions in FIG. 12 represent the internal defects having the echo strength of 50% or greater. The echo strength of 50% refers to an echo strength in which a master test piece having a defect area of 0.2 mm² is adjusted to maintain the same area even in the image analysis to be described later. Further, a result obtained by performing the image analysis for the respective internal defects having the echo strength of 50% shown in FIG. 12 is shown in FIG.. 13.. Here, a case where the number of pixels is 20 or less (the area is 0.2 mm² or less) was determined to have no problem in the strength, and was excluded from an internal defect evaluation target.

Table 2 represents the areas of all the internal defects analyzed in this manner. The total area of the internal defects is 4.99 mm², and the total defect detection area is 1400 mm². In the present embodiment, a value by dividing the total area of the internal defects by the total defect detection area was defined as a defect ratio, and an internal defect state and the strength of the aluminum die casting product were evaluated by the defect ratio. In this example, the defect ratio is 4.99/1400 x 100=0.36

**[Table 2]**

| Defect area [mm²] |
|---|
| 0.36 |
| 0.24 |
| 0.23 |
| 0.21 |
| 0.21 |
| 0.26 |
| 0.21 |
| 0.25 |
| 0.67 |
| 0.28 |
| 0.37 |
| 0.23 |
| 0.79 |
| 0.50 |
| 0.19 |
| Total 4.99 |

In a similar manner, with respect to seven aluminum die casting products (column housings) 11, an internal defect of a high stress portion (key lock portion) was detected by the ultrasonic flaw detection, the area of the detected internal defect was calculated by the image analysis, and the defect ratio was calculated by dividing the total area of the internal defects by the total defect detection area. Further, a torsion test was performed for the aluminum die casting products (column housings) 11 to detect the number of torsion until the breakage occurs. This torsion test is appended to Technical Standards for locking apparatus of four-wheeled vehicles, Attachment 7, Details Public Notice Attachment 1-7, Road Transport Vehicle Maintenance Standard 11-2 in Road Transport Vehicle Law. The test was performed based on a test procedure of a lock that acts on a steering device provided with a torque limit device regulated in Attachment 2. Here, in the present embodiment, in consideration of a safety factor, a torque value was set to 200 Nm that is two times a standard value of 100 Nm. Then, the cycle was repeated to calculate the number of torsion until the breakage occurs. Table 3 represents the relationship between the defect ratio of an internal defect inside the high stress portion (key lock portion) 15 and the number of torsion when the breakage occurs in the torsion test Further, FIG.. 14 is a graph illustrating the results in Table 3.

**[Table 3]**

| | Defect ratio (%) | Number of torsion |
|---|---|---|
| Example | 0.29% | 35 |
| | 0.43% | 33 |
| | 0.46% | 32 |
| Comparative example | 0.53% | 12 |
| | 0.61% | 10 |
| | 0.83% | 7 |
| | 1.16% | 4 |

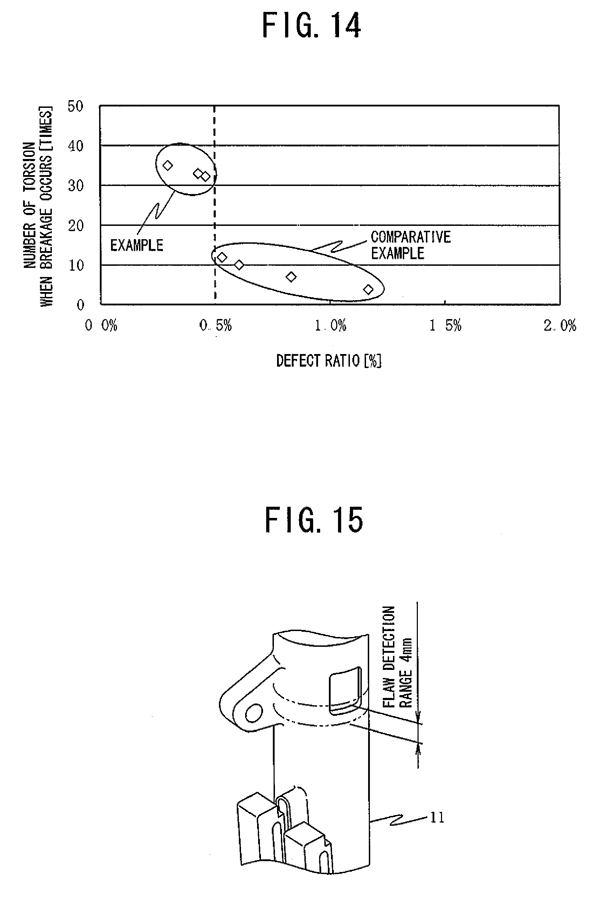

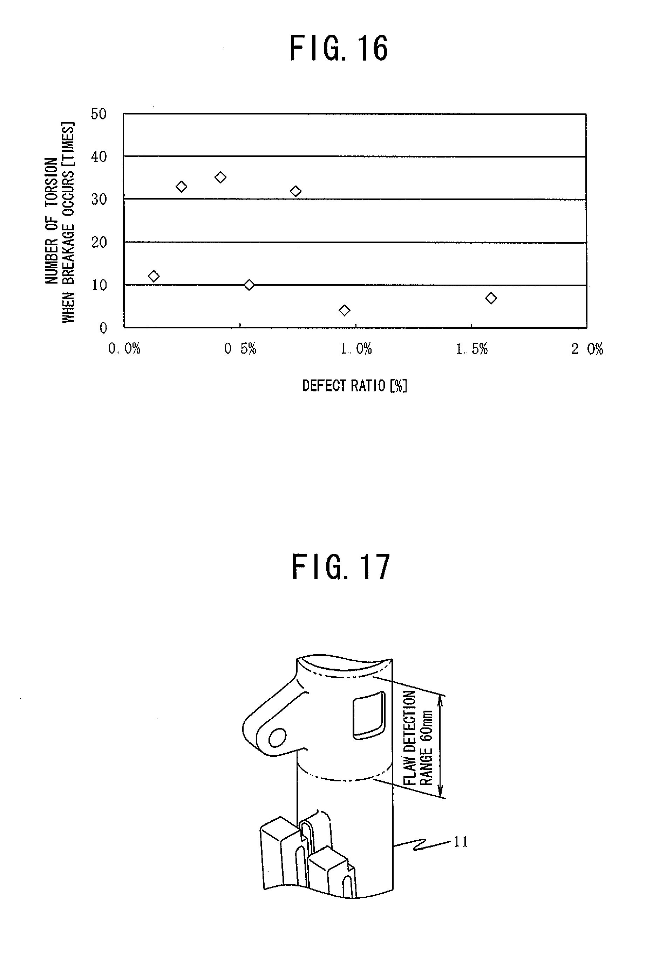

As is obvious from FIG. 14, it can be understood that if the defect ratio exceeds 0.5%, the number of torsion when the breakage occurs in the torsion test is noticeably reduced. In this regard, verification was performed by changing an ultrasonic flaw detection range, particularly, a range in the axial direction of the cylindrical portion of the column housing. First, the ultrasonic flaw detection of the internal defect was performed in a stress range of 80% or greater of the maximum stress calculated by the above-described stress analysis. The internal defect detection range in the axial direction of the cylindrical portion of the column housing was set to 4 mm as shown in FIG. 15.. Further, the above-described torsion test was performed for the column housing in which the internal defect was detected to calculate the number of torsion until the breakage occurred. Table 4 represents the relationship between the defect ratio of the internal defect inside the high stress portion (key lock portion) 15 and the number of torsion when the breakage occurs in the torsion test. Further, FIG. 16 is a graph illustrating the results in Table 4.

**[Table 4]**

| | Defect ratio (%) | Number of torsion |
|---|---|---|
| Comparative example | 0.42% | 35 |
| | 0.30% | 33 |
| | 0.39% | 32 |
| | 0.13% | 12 |
| | 0.71% | 10 |
| | 1.58% | 7 |
| | 0.95% | 4 |

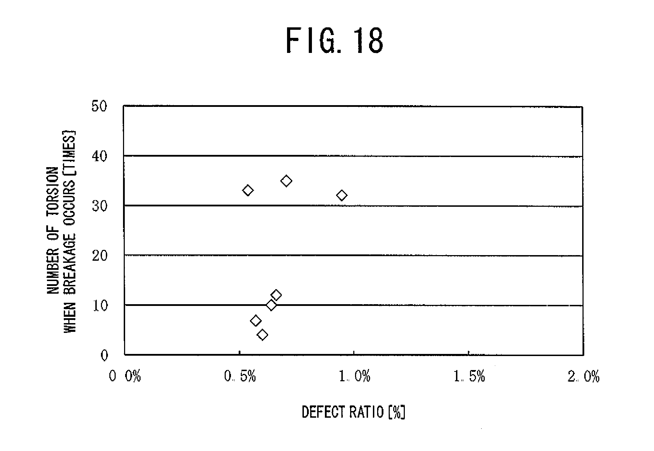

As obvious from FIG. 16, in a case where the ultrasonic flaw detection of the internal defect is performed in the stress range of 80% or greater of the maximum stress, the relationship between the defect ratio and the number of torsion when the breakage occurs shows variation. As the cause of this, non-capturing of the internal defect that is a factor of the breakage starting point or a sufficient amount of data is considered. Then, the ultrasonic flaw detection of the internal defect was performed in a stress range of 5% or greater of the maximum stress calculated by the above-described stress analysis.. An internal defect detection range in the axial direction of the cylindrical portion of the column housing was 60 mm, as shown in FIG. 17. Further, the above-described torsion test was performed for the column housing in which the internal defect was detected to calculate the number of torsion until the breakage occurs Table 5 represents the relationship between the defect ratio of the internal defect inside the high stress portion (key lock portion) 15 and the number of torsion when the breakage occurs in the torsion test Further, FIG. 18 is a graph illustrating the results in Table 5.

**[Table 5]**

| | Defect ratio (%) | Number of torsion |
|---|---|---|
| Comparative example | 0.71% | 35 |
| | 0.54% | 33 |
| | 0.95% | 32 |
| | 0.66% | 12 |
| | 0.64% | 10 |
| | 0.57% | 7 |
| | 0.60% | 4 |

As is obvious from FIG. 18, in a case where the ultrasonic flaw detection of the internal defect is performed in the stress range of 5% or greater of the maximum stress, the defect ratio is approximately uniform, regardless of the number of torsion when the breakage occurs. It is considered that this is due to a wide defect detection range and detection of a large amount of data outside the broken portion. Actually, in comparison of both of cases where the numbers of torsions when the breakage occurs are different at the same level of the defect ratio (a case where the defect ratio is 0.54% and the number of torsion is 33 and a case where the defect ratio is 0.60% and the number of torsion is 4), in the latter case, the internal defect occurred around the starting point, whereas in the former case, the internal defects were dispersed. This example is considered as an example in which the defect ratio became uniform due to the wide defect detection range.

As described above, in the strength evaluation method of the die casting product according to the present embodiment, the ultrasonic flaw detection is performed, with respect to the high stress portion of the column housing (die casting product) 11 calculated by the stress analysis in advance, for the internal defect in a predetermined range of the high stress portion, and the column housing (die casting product) 11 is evaluated to have a predetermined strength when the defect ratio obtained by dividing the total area of the internal defects in the predetermined range by the total defect detection area is less than or equal to a predetermined value. Thus, it is possible to appropriately evaluate the strength of an actual column housing (die casting product) 11.

Further, by setting the predetermined range of the high stress portion to the stress range of 50% or greater of the maximum stress of the high stress portion, it is possible to more appropriately evaluate the strength of the column housing (die casting product) 11.

Furthermore, according to the die casting product of the invention, by performing the strength evaluation by the above-described strength evaluation method and by setting the defect ratio obtained by dividing the total area of the internal defects in the predetermined range of the high stress portion by the total defect detection area to 0.5% or less, it is possible to obtain the column housing (die casting product) 11 having a predetermined strength.

Hereinabove, the second embodiment of the strength evaluation method of the die casting product is described, but the invention is not limited thereto, and various modifications and improvements may be made.

### Reference Signs List

- 1: key lock jig
- 2: torque transmission shaft
- 3: steering column housing
- 4: key seat
- 11: die casting product (column housing)
- 12: turntable
- 13: probe
- 14: internal defect
- 15: high stress portion (key lock portion)

## Claims

1. A strength evaluation method of a die casting product, the method comprising:
a casting step of casting a die casting product;
a breakage step of performing a breakage test of the die casting product after casting;
a strength reduction ratio calculation step of measuring an area ratio of cold flakes present in a broken surface of the die casting product in the breakage step, and calculating a strength reduction ratio from the relationship between a torsional breakage torque value in the breakage step and the area ratio; and
a strength evaluation area ratio calculation step of obtaining a threshold value of -3σ (σ is a standard deviation) using the strength reduction ratio as an average value, and calculating a strength evaluation area ratio of the die casting product from the threshold value and a predetermined strength range.

2. The strength evaluation method of a die casting product according to claim 1, wherein the casting step is a casting step based on JIS D5812, the die casting product is an aluminum column housing, and the breakage test is a torsion test for the die casting product.

3. The strength evaluation method of a die casting product according to claim 1 or 2, wherein the die casting product is used in a steering lock provided with an ignition switch for automobile steering.

4. A die casting product in which the strength is evaluated by the strength evaluation method of a die casting product according to claim 3,
wherein the die casting product is formed with a hole for the steering lock, and
wherein an area ratio of cold flakes in the area of a broken surface ranged up to a stress of 1/2 of a maximum value of stress acting on a breakage starting point, calculated by stress analysis from the breakage starting point when the hole for the steering lock is broken by the torsion test, is less than 10%.

5. A strength evaluation method of a die casting product, comprising:
performing, with respect to a high stress portion obtained by performing stress analysis for the die casting product in advance, ultrasonic flaw detection for an internal defect in a predetermined range of the high stress portion; and
evaluating whether the die casting product has a predetermined strength when a defect ratio obtained by dividing a total area of the internal defect in the predetermined range by a total defect detection area is less than or equal to a predetermined value.

6. The strength evaluation method of a die casting product according to claim 5, wherein the predetermined range of the high stress portion is a stress range of 50% or greater of a maximum stress of the high stress portion.

7. A die casting product in which the strength is evaluated by the strength evaluation method of a die casting product according to claim 5 or 6,
wherein the defect ratio is 0.5% or less.

8. The die casting product according to claim 7, wherein the die casting product is a column housing used in an electric power steering device of an automobile, and the high stress portion is a key lock portion of the column housing.
